# EUROPEAN PATENT SPECIFICATION

(11) **EP 1 940 049 B1**
(45) Date of publication and mention of the grant of the patent: **30.06.2010**
(21) Application number: 06127342.1
(22) Date of filing: 29.12.2006
(51) Int. Cl.: H04B 7/26

(54) **Scheduling method for wireless multihop relay communication system and system thereof**
Koordinationsverfahren für ein drahtloses Multihop-Relaiskommunikationssystem und System dafür
Procédé de planification pour système de communication à relais sans fil à plusieurs sauts, et système correspondant

(43) Date of publication of application: 02.07.2008
(73) Proprietor: Acer Incorporated, Taipei Hsien 221 (TW)
(72) Inventor: Lin, Shiang-Jiun, 540, Nantou City (TW); Fu, I-Kang, 815, Dashe Township (TW); Pai, Cheng-Kang, 231, Sindian City (TW); Sheen, Wen-Ho, 621, Jhenbei Village, Minsyong Township, (TW)
(74) Representative: Michalski Hüttermann & Partner Patentanwälte

(56) References cited:
- EP-A- 1 677 443
- WO-A-03/058984
- WO-A-2005/067173
- ESSELING N ET AL: "Performance evaluation of a fixed relay concept for next generation wireless systems" PERSONAL, INDOOR AND MOBILE RADIO COMMUNICATIONS, 2004. PIMRC 2004. 15TH IEEE INTERNATIONAL SYMPOSIUM ON BARCELONA, SPAIN 5-8 SEPT. 2004, PISCATAWAY, NJ, USA,IEEE, vol. 2, 5 September 2004 (2004-09-05), pages 744-751, XP010754131 ISBN: 0-7803-8523-3

## Description

The present invention relates to a method for grouping relay stations in a wireless multi-hop relay communication system and a system thereof. More particularly, the present invention relates to a scheduling method for a wireless multi-hop relay communication system for improving the transmission efficiency and capacity of the system

Next generation mobile communication systems are envisioned to provide high-speed, high link quality, and high security transmissions, and are also expected to support various communication services. An effective resource schedule/allocation method has to be established to meet different quality of service (QoS) requirements from different users. Users located at cell boundary have worse link quality due to the long transmission distance to the base station, and users in the cell with severe shadowing effect also have worse link quality, thereby the foregoing users cannot perform high-speed data transmissions. To resolve the foregoing problem, the deployment density of base stations can be increased to shorten the propagation distances between the base stations and users so as to improve the link quality; or more base stations can be deployed at those areas with severe shadowing for improving the link quality of users in the areas. However, the cost of the base stations and the cost of the backhaul network connections will be substantially increased by the aforementioned method. On the other hand, the transmission power of the base station can be increased to improve the link quality and to reduce the cost of the base station. However, if the transmission power is increased, not only the transmission cost will be increased but also the interference level will be increased.

Mutli-hop relay cell architecture is a good solution when considering all factors such as QoS, deployment cost, transmission power, and coverage area of the cell. Relay stations can be deployed within a cell to relay information from a base station to mobile stations with worse link quality, and vise versa. It has been shown that using relay stations may improve cell coverage, user throughput and system capacity.

Relay stations may be deployed at areas with severe shadowing or near the cell boundary, the users who can not be directly served by base station may be served by the relay stations, therefore the effective coverage area of the base station can be extended.

A single link with worse quality is divided into a plurality of links with better quality so that each of the links can provide higher transmission rate. However, since the same data will be duplicated and relayed over the air multiple times for multi-hop transmissions, it consumes the radio resources.

Besides, since there are a base station and several relay stations in a cell, to improve the spectrum efficiency, multiple serving stations may be active simultaneously if the potential interference is tolerant.

To obtain benefits for multi-hop relay communication systems, an efficient scheduling mechanism is required to arrange the transmissions of base stations and relay stations.

To improve the performance of a wireless communication system, a method of relay stations deployment in a Manhattan-like environment was provided in the Wireless World Initiative New Radio (WINNER) program. The Manhattan-like environment is a grid environment wherein the width of blocks is about 200m and the width of streets is about 30m.

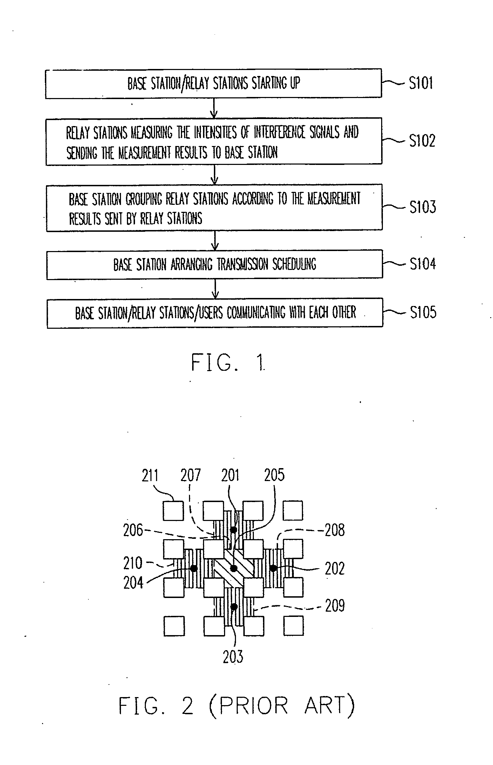

FIG. 2 illustrates a first layout of relay stations in a Manhattan-like environment, wherein a base station 205 and four relay stations 201~204 are disposed, and the base station and the relay stations all communicate with users through omni-directional antennas. However, since the relay stations are disposed outside of the coverage area 206 of the base station, each relay station requires an additional directional antenna pointing at the base station for communicating with the base station, and which increases the hardware cost of the relay stations.

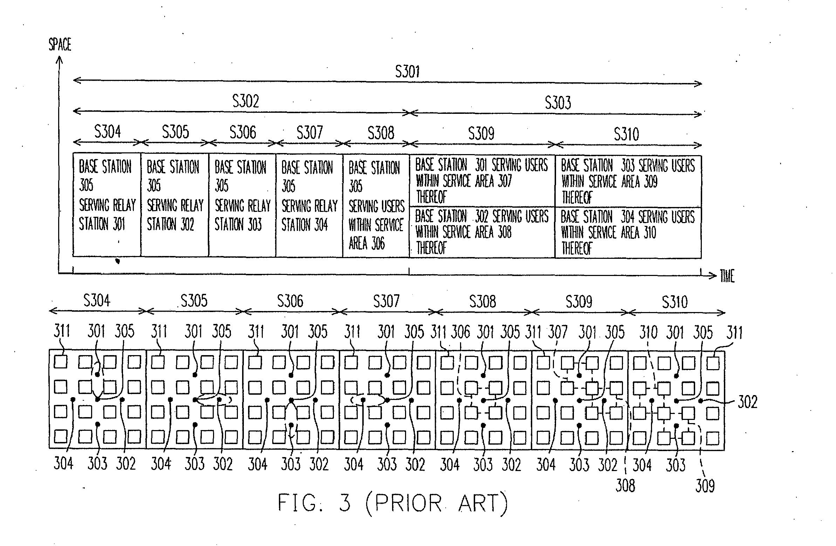

FIG. 3 illustrates the transmission scheduling in such structure, wherein frame structures are transmitted within a single cell. The frame S301 may be divided into two sub-frames S302~S303. The first sub-frame S302 is further divided into 5 time slots S304~S308, wherein the base station 305 serves the 4 relay stations 301~304 during the first 4 time slots S304~S307 respectively and the base station 305 serves users within area 306 which is directly connected to the base station during the fifth time slot S308. The second sub frame S303 is divided into two time slots S309~S310, and with the characteristics of spatial separation of the environment, the relay stations 301 and 302 serve users within the areas 307 and 308 connected thereto during the same time slot S309, and the relay stations 303 and 304 serve users within the areas 309 and 310 connected thereto during another time slot S310.

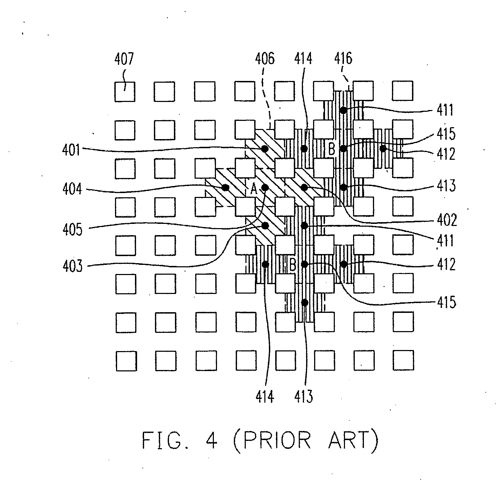

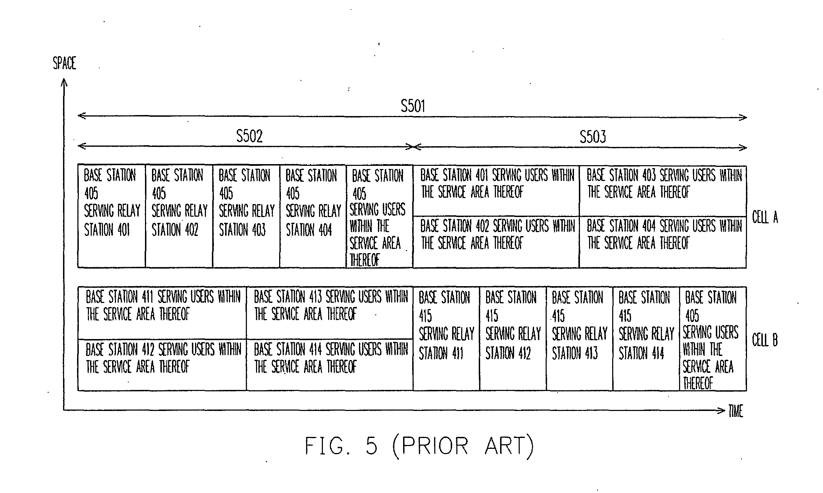

FIG. 4 illustrates the layout of relay stations in a multi-cell structure, wherein the coverage area 406 of a single cell A and the coverage area 416 of a single cell B are arranged in a staggered way. The base stations 405 and 415 in FIG. 4 respectively represent the positions of the base stations in cell A and cell B. The relay stations 401, 402, 403, and 404 belong to cell A, and the relay stations 411, 412, 413, and 414 belong to cell B. The arrangement of transmission frames thereof is shown in FIG. 5, wherein the arrangement of transmission frames between adjacent cells is to permute the operation orders of the sub-frames S502∼S503 in a frame S501 so that interference between cells can be prevented. The main purpose of the relay stations is to extend the coverage area of the base station, however, the link quality of users at the boundary of the service range of the base station cannot be improved. Besides, all the base station are idled for some time durations in the frame structure, since base stations are the only serving stations connected to the backhaul networks and carrying the effective data, the transmission efficiency of the base station in this design is not ideal.

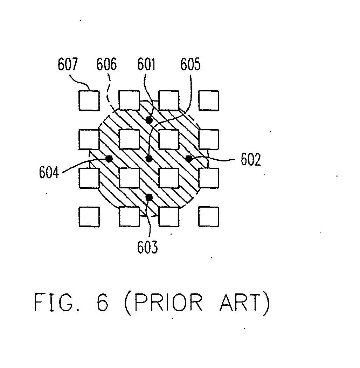

FIG. 6 illustrates the second layout of a base station 605 and four relay stations 601∼604 in a Manhattan -like environment, wherein the base station and the relay stations all communicate with users by using omni-directional antennas. Since the relay stations 601~604 are disposed within the coverage area 606 of the base station, no additional directional antenna is required by each relay station for communicating with the base station and in the design, the link quality of users in the cell boundary can be improved.

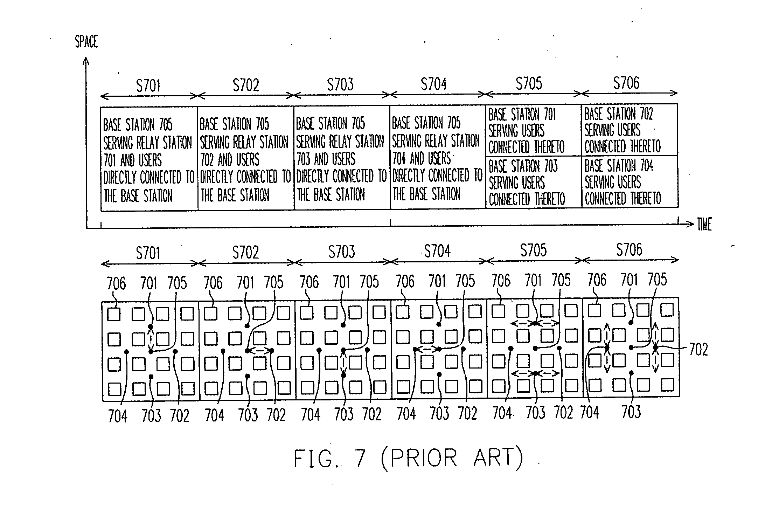

In this layout with all serving stations equipped with omni-directional antennas, the feasible transmission scheduling is shown as FIG. 7. FIG. 7 illustrates the transmission frame structure in a single cell, wherein the base station 705 respectively serves the four relay stations 701∼704 sequentially during the first four time slots S701~S704, and at the same time, the base station 705 serves users directly connected to the base station 705. The relay stations 701 and 703 serve users connected thereto during the time slot S705. After that, the relay stations 702 and 704 serve users during the next time slot S706. The main purpose of such a layout is to improve the link quality of users at cell boundary; however, a complete transmission within a single cell requires at least 6 phases to be completed. When considering the multi-cell structure, because of the use of omni-directional antennas, the reuse factor of at least 2 is required to avoid the severe inter-cell interference, and thus decreases the overall system capacity.

Regardless of the first layout or the second layout that all serving stations are equipped with omni-directional antennas, all the base station and the relay stations are idled for some time in the frame structure, thus, the transmission efficiency thereof is not ideal.

WO-A2-03/058984 discloses a scheduling method and communication system in accordance with the precharacterizing parts of claims 1 and 28.

Accordingly, the present invention is directed to a transmission scheduling method for a wireless multi-hop relay communication system, wherein relay stations are disposed within the coverage area of a base station for serving users with poor link quality to the base station. In the present invention, base stations and relay stations are equipped with directional antennas or sector antennas to further exploit the advantage of spatial separations inherited in the environment, and through the mechanism of grouping and permutation of transmission scheduling, interference inside a single cell and between adjacent cells is reduced, accordingly, the capacity of the system is improved.

The present invention provides a transmission scheduling method as defined in claim 1.

The transmission scheduling mechanism in the present invention is described as follows with time division duplex access as example. When a base station serves the relay stations of a particular group with directional antennas or sector antennas, the relay stations of other groups which are not served by the base station during this period serve users within their coverage areas by appropriate power control. According to the transmission scheduling mechanism, users of different groups can have time division multiple accesses with divisions in the time domain, while the relay stations within the same group can reuse the radio resources at the same time and on the same frequency through the characteristic of spatial separation, so that the transmission efficiency and the capacity of the system can be improved.

In a multi-cell structure, transmission scheduling between adjacent cells can be achieved by permuting group service order of the transmission scheduling of single cells. As to any two adjacent cells A and B, when the base station in cell A serves a particular group j in cell A during the i^{th} phase, the base station in the adjacent cell B serves another group k in cell B which has less interference to group j in cell A during the i^{th} phase, thus, high spectrum efficiency and high transmission efficiency of the system can be achieved.

In order to make the aforementioned and other objects, features and advantages of the present invention comprehensible, a preferred embodiment accompanied with figures is described in detail below.

The accompanying drawings are included to provide a further understanding of the invention, and are incorporated in and constitute a part of this specification. The drawings illustrate embodiments of the invention and, together with the description, serve to explain the principles of the invention.

FIG. 1 is a flowchart of an actual implementation of the present invention.

FIG. 2 illustrates the first setup of a base station and a plurality of relay stations of a single cell in a Manhattan-like environment according to a conventional technique.

FIG. 3 illustrates the transmission frame structure within a single cell of the first setup in a Manhattan-like environment according to a conventional technique.

FIG. 4 illustrates the setup of base stations and relay stations of multiple cells of the first setup in a Manhattan-like environment according to a conventional technique.

FIG. 5 illustrates the transmission frame structure between multiple cells of the first setup in a Manhattan-like environment according to a conventional technique.

FIG. 6 illustrates the second setup of a base station and a plurality of relay stations with omni-directional antennas in a Manhattan-like environment according to a conventional technique.

FIG. 7 illustrates the transmission frame structure within a single cell of the second setup with all serving stations equipped with omni-directional antennas in a Manhattan-like environment.

FIG. 8 illustrates the setup of a base station and a plurality of relay stations with directional antennas or sector antennas according to an exemplary embodiment of the present invention.

FIG. 9 illustrates the first phase of transmission scheduling for uplink transmission and downlink transmission within a single cell according to an exemplary embodiment of the present invention.

FIG. 10 illustrates the second phase transmission scheduling for uplink transmission and downlink transmission within a single cell according to an exemplary embodiment of the present invention.

FIG. 11 illustrates the first phase transmission scheduling for uplink transmission and downlink transmission between adjacent cells according to an exemplary embodiment of the present invention.

FIG. 12 illustrates the second phase transmission scheduling for uplink transmission and downlink transmission between adjacent cells according to an exemplary embodiment of the present invention.

FIG. 13 illustrates the operations of single cell transmission scheduling during various phases according to an exemplary embodiment of the present invention.

The following embodiments will be described with a Manhattan-like environment as an example, and those having ordinary knowledge in the art should be able to implement the present invention in any other environment according to the spirit of the present invention and the descriptions of the following embodiments. In following embodiments, interference level is weakened by spatial separation produced by the shadowing effect of surrounding buildings in a Manhattan-like environment.

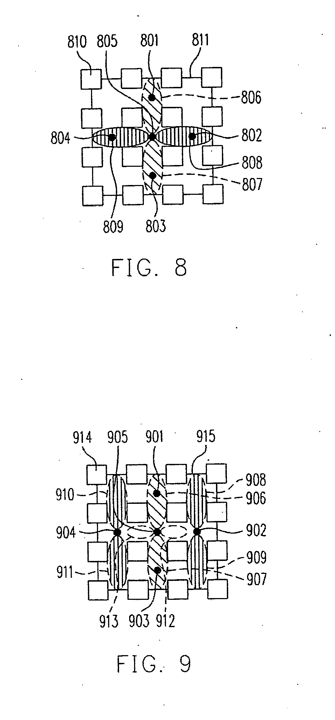

FIG. 8 illustrates the layout of relay stations in a Manhattan-like environment according to an embodiment of the present invention. Referring to FIG. 8, a microcell covers 690*690 square meters, and the base station 805 is disposed at a crossroad and four relay stations 801, 802, 803, and 804 are disposed at intersections of the two crossed streets with other streets in four directions, which is, the relay stations 801~804 are disposed at the intersections of the line of sight (LOS) and the non line of sight (NLOS) of the base station 805.

The base station 805 uses four directional antennas or a four-sector antenna for transmitting data to users in the streets in four directions and the relay stations 801∼804, and the relay stations 801∼804 use two directional antennas or two-sector antennas for data transmission with users within the NLOS of the base station 805. In other words, the base station 805 and four relay stations 801~804 serve all users within the coverage area 811 of a cell. Wherein users within the LOS of the base station can have single-hop links to the base station, while users outside of the LOS of the base station can establish multi-hop links to the base station through the relay stations.

FIG. 1 illustrates the detailed implementation flow of the present invention. First, after the base station 805 and the relay stations 801∼804 are started up in step S101, the relay stations 801∼804 respectively measure the intensities of interference level from other relay stations and the base stations in step S 102, wherein the potential interference level may be measured by measuring the data signal or the reference signal transmitted by the relay stations and base stations respectively. In step S103, the relay stations 801∼804 report the measurement results thereof back to the base station 805. Next, the base station 805 separates the relay stations 801~804 into groups according to the measurement results reported by the relay stations 801~804. The base station 805 separates those relay stations which may potentially go beyond a tolerable interference threshold into different groups. For example, relay station 801 and relay station 803 are put into group A, while relay station 802 and relay station 804 are put into group B. Or, if the transmission target of one of the relay stations 801~804 is another relay station and the target relay station cannot receive and send data at the same time, the two relay stations are put into different groups. The smaller the number of groups is the better.

In step S104, the base station 805 arranges transmission scheduling of the relay stations 801∼804 after the relay stations 801∼804 are grouped. Wherein the number of groups is considered as the number of phases in a service period for transmission scheduling. Finally, in step S105, the base station 805, the relay stations 801~804, and the users start to communicate with each other.

In the present embodiment, if the number of groups is N, then a service period of a complete transmission scheduling can be divided into N phases, and downlink transmission and uplink transmission are contained in each phase. The foregoing one service period may be the length of a frame and the frame is divided into N phases, while the foregoing one service period may also be the length of a plurality of frames and the frames are divided into N phases all together. The downlink and uplink transmissions during various phases in a frame are arranged according to the definition of the frame, for example, the downlink and uplink transmissions during various phases may be arranged alternatively, or the downlink transmission of various phases are arranged first and then the uplink transmissions thereof are arranged. While the arrangement of downlink and uplink transmission is not limited by the present invention. In the present embodiment, the relay stations 801∼804 are separated into 2 groups, accordingly, a service period is divided into 2 phases.

During the first phase, as shown in FIG. 9, the base station 905 serves the relay stations 901 and 903 in the first group (referred to as group A thereinafter) and users within the LOS 906∼907 of the base station 905 in the direction of group A. The operations of the base station serving the group A include downlink transmission and/or uplink transmission.

The downlink transmission refers to that the base station 905 transmits data to the relay stations 901 and 903 in group A and to users within the LOS 906∼907 of the base station 905 in the direction of group A. During the same phase, the relay station 902 in the second group (referred to as group B thereinafter) relays the data received from the base station 905 during the previous phase to users within the NLOS of the base station and within the LOS 908∼909 of group B, and the relay station 904 in group B relays the data received from the base station 905 during the previous phase to users within the NLOS of the base station and within the LOS 910 ~911 of group B. Moreover, according to the actual requirement, those having ordinary knowledge in the art would also be able to make the base station 905 to serve users within the service areas 912∼913 around the base station 905 and in the direction of group B with appropriate power control by lower transmission power during the first phase. Wherein, the lower transmission power allows the interference generated by the base station to the relay stations to be lower than a tolerable threshold.

The uplink transmission refers to the relay stations 901 and 903 in group A and users within the LOS 906∼907 of the base station 905 in the direction of group A transmit data to the base station 905. During the same phase, the relay station 902 in group B receives the uplink data from users within the areas 908 and 909, and the relay station 904 in group B receives the uplink data from users within the areas 910 and 911. Moreover, according to the actual requirement, those having ordinary knowledge in the art would be able to make users within the service areas 912 and 913 around the base station 905 and in the direction of group B to transmit uplink data to the base station 905 during the first phase.

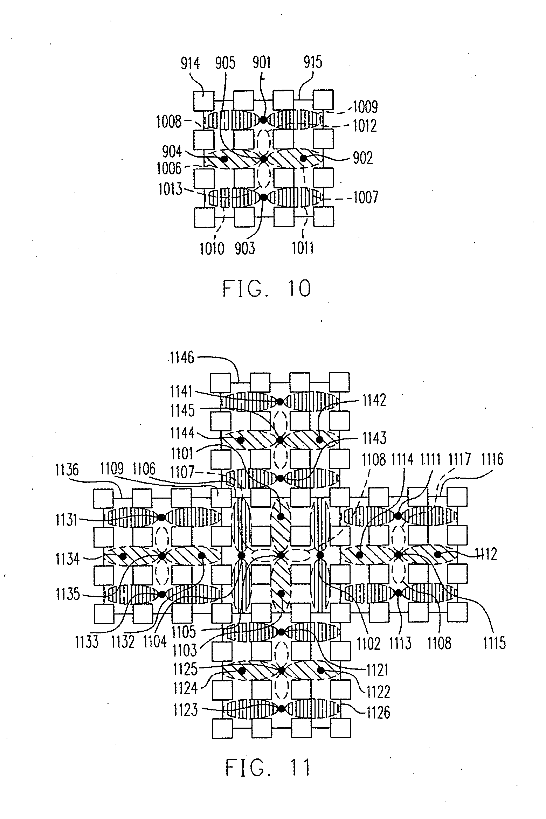

During the second phase, as shown in FIG. 10, the base station 905 serves the group B and users within the LOS 1006 and 1007 of the base station 905 in the direction of group B. The operation of the base station 905 serving the group B includes downlink transmission and/or uplink transmission.

The downlink transmission during the second phase refers to the base station 905 transmitting data to the relay stations 902 and 904 in group B and users within the LOS 1006 and 1007 of the base station 905 in the direction of group B. During the same phase, the relay stations 901 and 903 in group A respectively relay the data received from the base station 905 during the previous phase to users within the NLOS of the base station and within the LOS 1008~1009 and 1010~1011 of group A. Moreover, according to the actual requirement, those having ordinary knowledge in the art would be able to make the base station 905 to serve users in the service areas 1012 and 1013 around the base station 905 and in the direction of group A with appropriate power control by lower transmission power during the second phase.

The uplink transmission during the second phase refers to the relay stations 902 and 904 in group B and users within LOS 1006 and 1007 of the base station 905 in the direction of group B transmit data to the base station 905. During the same phase, the relay station 901 in group A receives the uplink data from users in areas 1008 and 1009, and the relay station 903 in group A receives the uplink data from users within areas 1010 and 1011. Moreover, according to the actual requirement, those having ordinary knowledge in the art would be able to make users within the areas 1012 and 1013 to transmit uplink data to the base station 905 during the second phase.

In a multi-cell structure, the service orders of transmission scheduling of two adjacent cells are permuted with interferences between cells and the signal quality of users at cell boundary in consideration, as shown in FIG. 11. Wherein the cells adjacent to cell A (coverage area 1106) in four directions are cell B (coverage area 1116), cell C (coverage area 1126), cell D (coverage area 1136), and cell E (coverage area 1146). A base station 1115 and relay stations 1111~1114 are disposed in the coverage area 1116 of cell B; a base station 1125 and relay stations 1121~1124 are disposed in the coverage area 1126 of cell C; a base station 1135 and relay stations 1131~1134 are disposed in the coverage area 1136 of cell D; and a base station 1145 and relay stations 1141~1144 are disposed in the coverage area 1146 of cell E. In the present embodiment, the service orders of cells B~E are assumed to be the same. Accordingly, only cell B will be described below as an example.

Within the coverage area 1106 of cell A, when the base station 1105 serves the relay stations 1101 and 1103 in group A and users within the LOS of the base station 1105 in the direction of group A (i.e. the group A which performs single cell transmission scheduling), the adjacent base stations in four directions, for example, the base station 1115 in the coverage area 1116 of cell B, serves the relay stations 1112 and 1114 in group B and users in the LOS of the base station 1115 in the direction of group B (i.e. the group B which performs single cell transmission scheduling). Meanwhile, the relay stations 1102 and 1104 in group B within the coverage area 1106 of cell A and the relay stations 1111 and 1113 in group A within the coverage area 1116 of cell B perform data transmission (serving users). In the present embodiment, the base stations 1105 and 1115 respectively transmit data to users within areas 1107~1108 and 1117~1118 with lower transmission power.

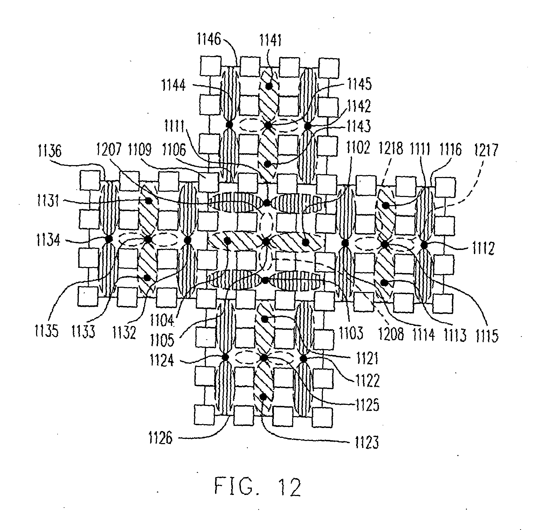

FIG. 12 illustrates the operations during the next phase. Within the coverage area 1106 of cell A, when the base station 1105 serves the relay stations 1102 and 1104 in group B and users within the LOS of the base station 1105 in the direction of group B, the adjacent base stations in four directions, for example, the base station 1115 in the coverage area 1116 of cell B, serves the relay stations 1111 and 1113 in group A and users within the LOS of the base station 1115 in the direction of group A. Meanwhile, the relay stations 1101 and 1103 in group A within the coverage area 1106 of cell A and the relay stations 1112 and 1114 in group B within the coverage area 1116 of cell B perform data transmission (serving users). In the present embodiment, the base stations 1105 and 1115 respectively transmit data to users within areas 1207∼1208 and 1217~1218 with lower transmission power.

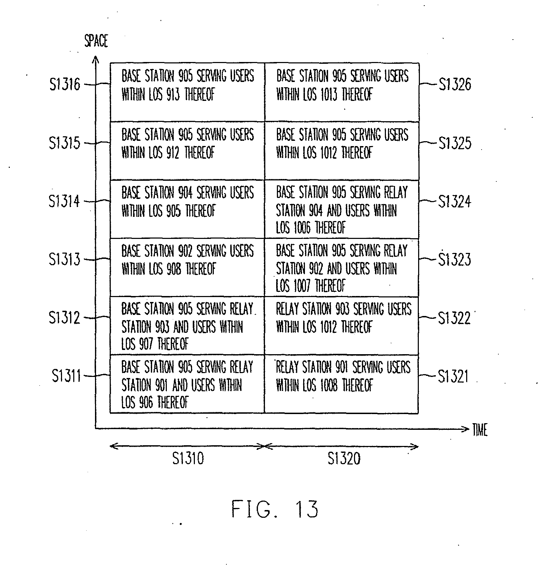

FIG. 13 illustrates the op erations of transmission scheduling during various phases of a single cell. Referring to FIGs. 9, 10, and 13, the operations S1311 and S 1312 during the first phase S 1310 of single cell transmission scheduling include the base station 905 serving the relay stations 901 and 903 in group A and users within area 906∼907. During the same phase, the operations S1313 and S1314 of a single cell transmission scheduling S1310 include the relay stations 902 and 904 in group B respectively serving users within areas 908∼909 and areas 910∼911. Moreover, according to the actual requirement, those having ordinary knowledge in the art may also make the operations S 1315 and S 1316 during the first phase S 1310 of a single cell transmission scheduling to be the base station serving users within areas 912~913.

The operations S 1323 and S 1324 during the second phase S 1320 of a single cell transmission scheduling include the base station 905 serving the relay stations 902 and 904 in group B and users within areas 1006∼1007. During the same phase, the operations S 1321 and S 1322 of the single cell transmission scheduling are that the relay stations 901 and 903 in group A respectively serve users within areas 1008∼1009 and areas 1010~1011. Moreover, according to the actual requirement, those having ordinary knowledge in the art may also make the operations S 1325 and S 1326 during the second phase S 1320 of a single cell transmission scheduling to be the base station serving users within areas 1012~1013.

In a multi-cell structure, the service orders of the transmission scheduling in the frame structures of two adjacent cells are permuted with interferences between cells and the signal quality of users at cell boundary in consideration.

Table 1 shows related comparisons between the present invention and the conventional technique. Wherein the "frequency reuse factor" shows the proportion of usable frequency of a single cell to the usable frequency of the system; since a base station is the only serving station connected to the backhaul network in a cell, the "effective frame" shows the number of frames a base station receives and sends during a service period; and the "capacity gain" is the gain obtained with the "frequency reuse factor" and the "effective frame" in consideration. The present invention is compared to the second setup in the WINNER's design with all serving stations equipped with omni-directional antennas of the same coverage areas. "Design 1 of the present invention" is the design wherein the base station does not serve users around the base station with lower transmission power, and "design 2 of the present invention" is the design wherein the base station serves users around the base station with appropriate power control by lower transmission power.

In the second setup in the WINNER's design with all serving stations equipped with omni-directional antennas, data has to be transmitted between adjacent cells on different frequencies to prevent interference between two adjacent cells, thus, the "frequency reuse factor" thereof is ½. In this design, 6 phases are needed to complete downlink transmission and/or uplink transmission, the actual number of frames transmitted by the base station is 4, thus, the "effective frame" is 2/3.

According to the present embodiment, in the first design of the present invention, data is transmitted on the same frequency between adjacent cells, thus, the "frequency reuse factor" thereof is 1. And during the two phases of a complete downlink transmission, the base station actually transmits 4 frames, thus, the "effective frame" thereof is 2, and uplink transmission is similar to downlink transmission. Besides, if it is assumed that the "capacity gain" of the second setup in the WINNER's design with all serving stations equipped with omni-directional antennas is 1, then the first design of the present invention excels 2 times in the usage of frequency spectrum and the "effective frame" of the first design of the present invention is 3 times of those of the second setup in the WINNER's design with all serving stations equipped with omni-directional antennas, thus, the "capacity gain" is 6.

In the second design of the present invention, since data is transmitted on the same frequency between adjacent cells, thus, the "frequency reuse factor" thereof is 1. During the 2 phases of a complete downlink transmission, the base station actually transmits 8 frames, thus, the "effective frame" is 4, and uplink transmission is similar to downlink transmission. Besides, if the "capacity gain" of the second setup in the WINNER's design with all serving stations equipped with omni-directional antennas is assumed to be 1, then the first design of the present invention excels 2 times in the usage of frequency spectrum and the "effective frames" of the first design of the present invention is 6 times of those of the second setup in the WINNER's design with all serving stations equipped with omni-directional antennas, thus, the "capacity gain" is 12.

**Table 1: Comparisons between the present invention and conventional technique**

| | Frequency reuse factor | Effective frames | Capacity gain |
|---|---|---|---|
| The second setup in the WINNER's design with all serving stations equipped with omni-directional antennas | 1/2 | 2/3 | 1 |
| Design 1 of the present invention | 1 | 2 | 6 |
| Design 2 of the present invention | 1 | 4 | 12 |

In summary, according to the present invention, in a wireless multi-hop relay communication system, the service areas of the base station and relay stations are divided into a plurality of regions by using the shadowing effect of the surroundings. The intensities of interference level are measured by the relay stations and sent to the base station, and the base station separates the relay stations into different groups according to the intensities of potential interference level reported by the relay stations, so that the base station serves the groups sequentially in the time domain. With good isolations of interfering signal due to shadow effect, the same radio resources can be reused and scheduled for different relay stations to substantially improve the system capacity with insignificant interference increment. In a multi-cell structure, universal frequency reuse is achieved by permuting the group service orders of transmission scheduling of adjacent cells. Through the mechanism of grouping and permutation of transmission scheduling, interference inside a single cell and between adjacent cells is prevented and high spectrum efficiency is achieved through aggressive radio frequency reuse. Furthermore, in the transmission scheduling structure provided by the present invention, the base station can transmit data during various phases; thus, the effective cell/system capacity can be improved considerably.

## Claims

1. A scheduling method for a wireless multi-hop relay communication system, wherein the wireless communication system comprises at least one base station (805) dominating a plurality ofrelay stations (801-804), the scheduling method being **characterized by**:
separating the relay stations (801-804) into N groups according to intensity of potential interference level between the relay stations (801-804), wherein N is an integer greater than 0;
dividing a service period into N phases by the base station (805)
serving the relay stations (801-804) in a j^{th} group during an i^{th} phase by the base station (805), ; and
serving the users and the subordinated relay stations (801-804) within service areas of the relay stations (801-804) not in the j^{th} group during the i^{th} phase by the relay stations (801-804) not in the j^{th} group.

2. The scheduling method as claimed in claim 1, wherein the relay stations (801-804) are deployed to have line of sight (LOS) condition to the base station (805).

3. The scheduling method as claimed in claim 1, wherein the relay stations (801-804) are deployed within a service area of the base station (805).

4. The scheduling method as claimed in claim 1, wherein the relay stations (801-804) serve users have no LOS condition to the base station (805).

5. The scheduling method as claimed in claim 1, wherein the relay stations (801-804) serve users having better link quality to the relay station (801-804) but having worse link quality to the base station (805).

6. The scheduling method as claimed in claim 1, wherein the step of separating the relay stations (801-804) into N groups comprises:
measuring (S102) the intensity of potential interference level from other relay stations (801-804) and base stations (805) by each of the relay stations (801-804), wherein the potential interference level is measured by measuring the data signal transmitted by the relay stations (801-804) and base stations (805);
reporting the measurement results to the base station (805) by each of the relay stations (801-804); and
separating (S103) the relay stations (801-804) into N groups by the base station (805) according to the measurement results reported by the relay stations (801-804).

7. The scheduling method as claimed in claim 1, wherein the step (S103) of separating the relay stations (801-804) into N groups comprises:
measuring intensity of potential interference level from other relay stations (801-804) and base stations (805) using each of the relay stations (801-804), wherein the potential interference level may be measured by measuring the reference signal transmitted by the relay stations (801-804) and base stations (805) respectively;
reporting the measurement results to the base station (805) by each of the relay stations (801-804); and
separating the relay stations (801-804) into N groups by the base station (805) according to the measurement results reported by the relay stations (801-804).

8. The scheduling method as claimed in claim 7, wherein the step (S103) of separating the relay stations (801-804) into N groups comprises:
determining a scheduling order of the groups by the base station (805).

9. The scheduling method as claimed in claim 7, wherein two of the relay stations (801-804) which may potentially go beyond a tolerable interference threshold are separated into different groups.

10. The scheduling method as claimed in claim 7, wherein if the transmission target of one relay station (801-804) is another relay station (801-804) and the target relay station cannot receive and send data simultaneously, the two relay stations are separated into different groups.

11. The scheduling method as claimed in claim 1, wherein the base station (805) divides a service period into N phases, wherein N is a group number of the relay stations (801-804); wherein the service period is a length of a frame and the frame is divided into N phases.

12. The scheduling method as claimed in claim 1, wherein the base station (805) divides (S104) a service period into N phases, wherein N is a group number of the relay stations (801-804); wherein a service period is a length of a plurality of frames and the frames are divided into N phases all together.

13. The scheduling method as claimed in claim 1, further comprising:
the base station (805) serving users in a direction of relay stations (801-804) in a j^{th} group during an i^{th} phase (S105).

14. The scheduling method as claimed in claim 13, wherein the step (S105) of serving users in the direction of the relay stations (801-804) in the j^{th} group during the i^{th} phase comprises:
performing downlink transmission to users in the direction of the relay stations (801-804) in a j^{th} group by the base station (805) during an i^{th} phase; and
performing uplink transmission to the base station (805) by users in the direction of the relay stations (801-804) in the j^{th} group during the i^{th} phase.

15. The scheduling method as claimed in claim 1, further comprising:
serving users not in the direction of the relay stations (801-804) in the j^{th} group but having the LOS condition to the base station (805) with appropriate power control by lower transmission power during the i^{th} phase using the base station (805);
wherein the lower transmission power allows an interference generated by the base station (805) to the relay stations (801-804) to be lower than a tolerable threshold.

16. The scheduling method as claimed in claim 1, wherein the step of the base station (805) serving the relay stations (801-804) in the j^{th} group during the i^{th} phase comprises:
performing downlink transmission to the relay stations (801-804) in the j^{th} group by the base station (805) during the i^{th} phase; and
performing uplink transmission to the base station (805) by the relay stations (801-804) in the j^{th} group during the i^{th} phase.

17. The scheduling method as claimed in claim 1, wherein the step of the relay stations (801-804) not in the j^{th} group serving users having the LOS condition to those relay stations (801-804) during the i^{th} phase comprises:
performing downlink transmission to users within the service areas of the relay stations (801-804) not in the j^{th} group during the i^{th} phase by the relay stations (801-804) not in the j^{th} group; and
performing uplink transmission to the relay stations (801-804) not in the j^{th} group by users within the service areas of the relay stations (801-804) not in the j^{th} group during the i^{th} phase.

18. The scheduling method as claimed in claim 1, wherein the users comprise mobile communication apparatuses.

19. The scheduling method as claimed in claim 18, wherein the mobile communication apparatuses comprise mobile phones and radio terminal reception equipments.

20. The scheduling method as claimed in claim 18, wherein the mobile communication apparatuses comprise radio terminal reception equipments.

21. A scheduling method according to claim 1, 18, 19, or 20, wherein the wireless communication system comprises a plurality of cells (A-E) and each cell (A-E) comprises a base station (805) and at least one relay station (801-804), the scheduling method comprising:
separating the relay stations (801-804) in each cell (A-E) into N groups according to intensity of potential interference level between the relay stations (801-804);
dividing a service period into N phases by the base station (805) in each cell (A-E);
wherein in any two adjacent cells A and B, in the cell A, the base station (805) serves the relay stations (801-804) in the j^{th} group duringthe i^{th} phase ;
in the cell B, the base station (805) serves the relay stations (801-804) in the k^{th} group during the i^{th} phase ;
in the cell A, relay stations (801-804) not in the j^{th} group serve users within the service areas of the relay stations (801-804) not in the j^{th} group during the i^{th} phase; and
in the cell B, relay stations (801-804) not in the k^{th} group serving users within the service areas of the relay stations (801-804) not in the k^{th} group during the i^{th} phase;
wherein the interference between the relay stations (801-804) of the j^{th} group of the cell A and the relay stations (801-804) of the k^{th} group in the cell B is within a predetermined interference threshold.

22. The scheduling method as claimed in claim 21, wherein the relay stations (801-804) in each cell (A-E) are deployed to have LOS condition to the base station (805) in the cell (A-E).

23. The scheduling method as claimed in claim 21, wherein the relay stations (801-804) in each cell (A-E) are deployed within the service area of the base station (805) in the cell (A-E).

24. The scheduling method as claimed in claim 21, wherein the relay stations (801-804) in each cell (A-E) serve users in the cell (A-E) and without LOS condition to the base station (805) in the cell (A-E).

25. The scheduling method as claimed in claim 21, wherein the relay stations (801-804) in each cell (A-E) serve users having better link quality to the relay station (801-804) but worse link quality to the base station (805) in the cell (A-E).

26. The scheduling method as claimed in claim 21, wherein the step (S103) of separating the relay stations (801-804) in each cell (A-E) into N groups comprises:
the relay stations (801-804) in the cell (A-E) respectively measuring the intensity of potential interference level from other relay stations (801-804) and base stations (805), wherein the interference level is measured by measuring the data signal transmitted by the relay stations (801-804) and base stations (805);
each relay station (801-804) in the cell (A-E) reporting the measurement results to the base station (805) in the cell (A-E); and
separating the relay stations (801-804) into N groups by the base station (805) in the cell (A-E) according to the measurement results reported by the relay stations (801-804).

27. The scheduling method as claimed in claim 21, wherein the step (S103) of separating the relay stations (801-804) in each cell (A-E) into N groups comprises:
measuring (S102) the intensity of potential interference level from other relay stations (801-804) and base stations (805) by each relay station (801-804) in the cell (A-E), wherein the potential interference level may be measured by measuring the reference signals respectively transmitted by the relay stations (801-804) and base station (805);
reporting the measurement results to the base station (805) by each relay station (801-804) in the same cell (A-E); and
separating the relay stations (801-804) into N groups by the base station (805) in the cell (A-E) according to the measurement results reported by the relay stations (801-804).

28. The scheduling method as claimed in claim 27, wherein the step (S103) of separating the relay stations (801-804) in each cell (A-E) into N groups comprises:
determining the scheduling order of the relay station groups in the cell by the base station in the same cell (A-E).

29. The scheduling method as claimed in claim 27, wherein two of the relay stations (801-804) in each cell (A-E) which go beyond a predetermined interference threshold are separated into different groups.

30. The scheduling method as claimed in claim 27, wherein if the transmission target of one relay station (801-804) in each cell (A-E) is another relay station (801-804) and the target relay station cannot receive and send data simultaneously, the two relay stations are separated into different groups.

31. The scheduling method as claimed in claim 21, wherein the base station (805) in each cell (A-E) divides a service period into N phases, wherein N is the group number of the relay stations (801-804) in the cell; wherein the service period is a length of a frame and the frame is divided into N phases.

32. The scheduling method as claimed in claim 21, wherein the base station (805) in each cell (A-E) divides a service period into N phases, wherein N is the group number of the relay stations (801-804) in the cell (A-E); wherein the service period is a length of a plurality of frames and the frames are divided into N phases all together.

33. The scheduling method as claimed in claim 21 further comprising:
in any of two adjacent cells A and B, the base station (805) in the cell A serving users is in a direction of relay stations (801-804) in the j^{th} group during the i^{th} phase; and
the base station (805) in the cell B serving users is in a direction of relay stations (801-804) in the k^{th} group during the i^{th} phase.

34. The scheduling method as claimed in claim 33 further comprising:
the base station (805) in the cell A performing downlink transmission to users in a direction of the relay stations (801-804) in the j^{th} group during the i^{th} phase;
the users in the cell A in the direction of the relay stations (801-804) in the j^{th} group performing uplink transmission to the base station (805) during the i^{th} phase;
the base station (805) in the cell B performing downlink transmission to users in the direction of the relay stations (801-804) in the k^{th} group during the i^{th} phase; and
the users in the cell B in the direction of the relay stations (801-804) in the k^{th} group performing uplink transmission to the base station (805) during the i^{th} phase.

35. The scheduling method as claimed in claim 21 further comprising:
serving users not in the direction of the relay stations (801-804) in the j^{th} group of cell A or not in the direction of the relay stations (801-804) in the k^{th} group of cell B but having the LOS condition to the base station (805) with appropriate power control by lower transmission power during the i^{th} phase by the base station (805) in each cell (A-E);
wherein the lower transmission powerallows the interference of the base station (805) to the relay stations (801-804) to be within a predetermined threshold.

36. The scheduling method as claimed in claim 21 further comprising:
the base station (805) in the cell A performing downlink transmission to the relay stations (801-804) in the j^{th} group during the i^{th} phase;
the relay stations (801-804) in the j^{th} group in the cell A performing uplink transmission to the base station (805) during the i^{th} phase;
the base station (805) in the cell B performing downlink transmission to the relay stations (801-804) in the k^{th} group during the i^{th} phase; and
the relay stations (801-804) in the cell B in the k^{th} group performing uplink transmission to the base station (805) during the i^{th} phase.

37. The scheduling method as claimed in claim 21 further comprising:
relay stations (801-804) in the cell Anot in the j^{th} group performing downlink transmission to users within the service areas of the relay stations (801-804) not in the j^{th} group during the i^{th} phase;
users in the cell A within the service areas of the relay stations (801-804) not in the j^{th} group performing uplink transmission to the relay stations (801-804) not in the j^{th} group during the i^{th} Phase;
the relay stations (801-804) in the cell B not in the k^{th} group performing downlink transmission to users within the service areas of the relay stations (801-804) not in the k^{th} group during the i^{th} phase; and
users in the cell B within the service areas of the relay stations (801-804) not in the k^{th} group performing uplink transmission to the relay stations (801-804) not in the k^{th} group during the i^{th} phase.

38. A system for reusing radio resources, the system comprising:
at least one relay station (801-804); and
at least one base station (805); **characterized in that** the base station (805) is adapted to separate the relay stations (801-804) into N groups according to intensity of potential interference level between the relay stations (801-804), wherein N is an integer greater than 0;
wherein the base station (805) is adapted to divide a service period into N phases; and
wherein the base station (805) is adapted to serve the relay stations (801-804) in the j^{th} group during the i^{th} phase; and the relay stations (801-804) not in the j^{th} group serve users within the service areas of the relay stations (801-804) not in the j^{th} group during the i^{th} phase.

39. The system as claimed in claim 38, wherein the relay stations (801-804) are deployed to have the LOS condition to the base station (805).

40. The system as claimed in claim 38, wherein the relay stations (801-804) are deployed within the service area of the base station (805).

41. The system as claimed in claim 38, wherein the relay stations (801-804) are adapted to serve users without the LOS condition to the base station (805).

42. The system as claimed in claim 38, wherein the relay stations (801-804) are adapted to serve users having better link quality to the relay station (801-804) but worse link quality to the base station (805).

43. The system as claimed in claim 38, wherein each relay station (801-804) is adapted to measure the intensity of potential interference level from other relay stations (801-804) and base stations (805) and reports the measurement results to the base station (805), the interference level is measured by measuring the transmission data of the relay stations (801-804) and base stations (805); and the base station (805) is adapted to separate the relay stations (801-804) into N groups according to the measurement results reported by the relay stations (801-804).

44. The system as claimed in claim 38, wherein each relay station (801-804) is adapted to measure the intensity of potential interference level from other relay stations (801-804) and report the measurement results to the base station (805), the interference level is measured by measuring the reference signals respectively transmitted by the relay stations (801-804) and base stations (805) and the base station (805) is adapted to divide the relay stations (801-804) into N groups according to the measurement results reported by the relay stations (801-804).

45. The system as claimed in claim 44, wherein the base station (805) is adapted to determine the scheduling order of the relay station groups.

46. The system as claimed in claim 44, wherein two of the relay stations (801-804) which go beyond a predetermined interference threshold are separated into different groups.

47. The system as claimed in claim 44, wherein if the transmission target of one relay station (801-804) is another relay station (801-804) and the target relay station cannot receive and send data at the same time, the two relay stations are separated into different groups.

48. The system as claimed in claim 38, wherein the base station (805) is adapted to serve users in the direction of the relay stations (801-804) in the j^{th} group during the i^{th} phase.

49. The system as claimed in claim 48, wherein the base station (805) is adapted to perform downlink transmission to users in the direction of the relay stations (801-804) in the j^{th} group during the i^{th} phase, and the users in the direction of the relay stations (801-804) in the j^{th} group to perform uplink transmission to the base station (805) during the i^{th} phase.

50. The system as claimed in claim 38, wherein the base station (805) is adapted to serve users not in the direction of the relay stations (801-804) in the j^{th} group but having the LOS condition to the base station (805) with appropriate power control by lower transmission power during the i^{th} phase, and the lower transmission power allows the interference of the base station (805) to the relay stations (801-804) to be within a predetermined threshold.

51. The system as claimed in claim 38, wherein the base station (805) is adapted to perform downlink transmission to the relay stations (801-804) in the j^{th} group during the i^{th} phase, and the relay stations (801-804) in the j^{th} group to perform uplink transmission to the base station (805) during the i^{th} phase.

52. The system as claimed in claim 38, wherein relay stations (801-804) not in the j^{th} group are adapted to perform downlink transmission to users within the service areas of the relay stations (801-804) not in the j^{th} group during the i^{th} phase; and users within the service areas of the relay stations (801-804) not in the j^{th} group to perform uplink transmission to the relay stations not in the j^{th} group during the the i^{th} phase.

53. The system as claimed in claim 38, wherein the users comprise mobile communication apparatuses.

54. The system as claimed in claim 53, wherein the mobile communication apparatuses comprise mobile phones and radio terminal reception equipments.

55. The system as claimed in claim 53, wherein the mobile communication apparatuses comprise radio terminal reception equipments.

## Patentansprüche

1. Eine Zeitablaufplanungsmethode für ein drahtloses Mehrfunkfeld-Umsetzer-Übermittlungssystem, **dadurch gekennzeichnet, dass** das drahtlose Übermittlungssystem aus mindestens einer Basisstation (805) aufgebaut ist, die mehrere Umsetzerfunktstellen (801-804) kontrolliert, wobei die Zeitablaufplanungsmethode mit den folgenden Merkmalen **gekennzeichnet** ist:
Aufteilung der Umsetzerfunkstellen (801-804) in N Gruppen je nach Intensität des potentiellen Geräuschpegels zwischen den Umsetzerfunkstellen (801-804), wobei die Ganzzahl N größer ist als 0;
Aufteilung einer Betriebsdauer in N Phasen durch die Basisstation (805); Bedienen der Umsetzerfunkstellen (801-804) in einer j-sten Gruppe während einer i-sten Phase durch die Basisstation (805), und Bedienen der Benutzer und der untergeordneten Umsetzerfunkstellen (801-804) innerhalb des Betriebsbereichs der Umsetzerfunkstellen (801-804), die während der i-sten nicht in der j-sten Gruppe sind, durch die Umsetzerfunkstellen (801-804), die nicht in der j-sten Gruppe sind.

2. Die Zeitablaufplanungsmethode nach Anspruch 1, **dadurch gekennzeichnet, dass** die Umsetzerfunkstellen (801-804) so angeordnet sind, dass sie einer Sichtlinie (LOS) zur Basisstation (805) entsprechen.

3. Die Zeitablaufplanungsmethode nach Anspruch 1, **dadurch gekennzeichnet, dass** die Umsetzerfunkstellen (801-804) innerhalb eines Betriebsbereiches der Basisstation (805) eingesetzt werden.

4. Die Zeitablaufplanungsmethode nach Anspruch 1, **dadurch gekennzeichnet, dass** die Umsetzerfunkstellen (801-804) Benutzer bedienen, die keiner LOS-Reihe zur Basisstation (805) entsprechen.

5. Die Zeitablaufplanungsmethode nach Anspruch 1, **dadurch gekennzeichnet, dass** die Umsetzerfunkstellen (801-804) Benutzer bedienen, deren Verbindungsqualität mit der Basisstation (801-804) besser, jene mit der Basisstation (805) jedoch schlechter ist.

6. Die Zeitablaufplanungsmethode nach Anspruch 1, **dadurch gekennzeichnet, dass** das Verfahren zum Aufteilen der Umsetzerfunkstellen (801-804) in N Gruppen die folgenden Schritte umfaßt:
Messen (S102) der Intensität des potentiellen Geräuschpegels von anderen Umsetzerfunkstellen (801-804) und Basisstationen (805) durch jede der Umsetzerfunkstellen (801-804), wobei der potentielle Geräuschpegel durch Messen der Datensignale, die mit den Umsetzerfunkstellen (801-804) und den Basisstationen (805) übertragen werden, gemessen wird;
Weitergabe der Meßresultate an die Basisstation (805) mit jeder der Umsetzerfunkstellen (801-804); und
Aufteilen (S 103) der Umsetzerfunkstellen (801-804) in N Gruppen durch die Basisstation (805) in Übereinstimmung mit den Meßresultaten, die von den Umsetzerfunkstellen (801-804) weitergegeben wurden.

7. Die Zeitablaufplanungsmethode nach Anspruch 1, **dadurch gekennzeichnet, dass** der Schritt (S103) zum Aufteilen der Umsetzerfunkstellen (801-804) in N Gruppen die folgenden Schritte umfaßt:
Messen der Intensität des potentiellen Geräuschpegels von anderen Umsetzerfunkstellen (801-804) und Basisstationen (805) mit Hilfe von jeder Umsetzerfunkstelle (801-804), wobei der potentielle Geräuschpegel durch Messen des Bezugsignals, das mit den Umsetzerfunkstellen (801-804) bzw. Basisstationen (805) gemessen werden kann;
Weitergabe der Meßresultate an die Basistation (805) durch jede der Umsetzerfunkstellen (801-804); und
Aufteilen der Umsetzerfunkstellen (801-804) in N Gruppen durch die Basisstation (805) in Übereinstimmung mit den Meßresultaten, die von den Umsetzerfunkstellen (801-804) weitergegeben wurden.

8. Die Zeitablaufplanungsmethode nach Anspruch 7, **dadurch gekennzeichnet, dass** der Schritt (S 103) des Aufreilens der Umsetzerfunkstellen (801-804) in N Gruppen den folgenden Schritt umfaßt:
Bestimmen einer Reihenfolge der Zeitablaufplanung der Gruppen durch die Basisstation (805).

9. Die Zeitablaufplanungsmethode nach Anspruch 7, **dadurch gekennzeichnet, dass** zwei der Umsetzerfunkstellen (801-804), die potentiell eine Geräuschtoleranzschwelle überschreiten, in verschiedene Gruppen aufgeteilt sind.

10. Die Zeitablaufplanungsmethode nach Anspruch 7, **dadurch gekennzeichnet, dass** die beiden Umsetzerfunkstellen in verschiedene Gruppen aufgeteilt sind, falls das Ziel der Übertragung einer Umsetzerfunkstelle (801-804) eine andere Umsetzerfunkstelle (801-804) ist und die Zielumsetzerfunkstelle die Daten nicht gleichzeitig empfangen und senden kann.

11. Die Zeitablaufplanungsmethode nach Anspruch 1, **dadurch gekennzeichnet, dass** die Basisstation (805) eine Betriebsdauer in N Phasen aufteilt, wobei N für eine Gruppennummer von Umsetzerfunkstellen (801-804) steht; wobei die Betriebsdauer eine Länge eines Datenübertragungsblockes und der Datenübertragungsblock in N Phasen aufgeteilt ist.

12. Die Zeitablaufplanungsmethode nach Anspruch 1, **dadurch gekennzeichnet, dass** die Basisstation (805) eine Betriebsdauer in N Phasen aufteilt (S104), wobei N für eine Gruppennummer von Umsetzerfunkstellen (801-804) steht; wobei eine Betriebsdauer eine Länge von mehreren Datenübertragungsblöcken ist und diese Datenübertragungsblöcke alle zusammen in N Phasen aufgeteilt werden.

13. Die Zeitablaufplanungsmethode nach Anspruch 1, weiter umfassend:
der Basisstationen (805), die die Benutzer in einer Richtung der Umsetzerfunkstellen (801-804) in einer j-sten Gruppe während einer i-sten Phase (S105) bedient.

14. Die Zeitablaufplanungsmethode nach Anspruch 13, **dadurch gekennzeichnet, dass** der Schritt (S 105) zum Bedienen der Benutzer in die Richtung der Umsetzerfunkstationen (801-804) in die j-ste Gruppe während der i-sten Phase die folgenden Schritte umfaßt:
Durchführen einer Abwärtsübertragung zu den Benutzern in Richtung der Umsetzerfunkstellen (801-804) in einer j-sten Gruppe durch die Basisstation (805) während einer i-sten Phase; und
Durchführen einer Aufwärtsübertragung zur Basisstation (805) durch Benutzer in Richtung der Umsetzerfunkstellen (801-804) in der j-sten Gruppe während der i-sten Phase.

15. Die Zeitablaufplanungsmethode nach Anspruch 1, weiter umfassend:
Bedienen der Benutzer, die sich nicht in Richtung der Umsetzerfunkstellen (801-804) in der j-sten Gruppe, sondern der LOS-Bedingung zu der Basisstation (805) mit der richtigen Leistungssteuerung durch die niedrigere Übertragungsfähigkeit während der i-sten Phase mit Hilfe der Basisstation (805) entsprechen,
**dadurch gekennzeichnet, dass** die niedrigere Übertragungsfähigkeit ein von der Basisstation (805) zu den Umsetzerfunkstellen (801-804) erzeugtes Geräusch zuläßt, das niedriger ist als eine Toleranzschwelle.

16. Die Zeitablaufplanungsmethode nach Anspruch 13, **dadurch gekennzeichnet, dass** der Schritt der Basisstation (805) zum Bedienen der Umsetzerfunkstellen (801-804) in der j-sten Gruppe während der i-sten Phase die folgenden Schritte umfaßt:
Durchführen einer Abwärtsübertragung zu den Umsetzerfunkstellen (801-804) in der j-sten Gruppe durch die Basisstation (805) während der i-sten Phase; und
Durchführen einer Aufwärtsübertragung zu den Basisstationen (805) durch die Umsetzerfunkstellen (801-804) in der j-sten Gruppe während der i-sten Phase.

17. Die Zeitablaufplanungsmethode nach Anspruch 1, **dadurch gekennzeichnet, dass** der Schritt der Umsetzerfunkstellen (801-804), die nicht in der j-sten Gruppe sind und die Benutzer der LOS-Bedingung zu den Umsetzerfunkstellen (801-804) während der i-sten Phase entsprechen, die folgenden Schritte umfaßt:
Durchführen der Abwärtsübertragung zu den Benutzern innerhalb des Betriebsbereiches der Umsetzerfunkstellen (801-804), die durch die Umsetzerfunkstellen (801-804), die nicht in der j-sten Gruppe sind, während der i-sten Phase nicht in der j-sten Gruppe sind; und
Durchführen der Aufwärtsfanktion zu den Umsetzerfunkstellen (801-804), die durch die Benutzer innerhalb der Betriebsbereiche der Umsetzerfunkstellen (801-804), die während der i-sten Phase nicht in der j-sten Gruppe sind, nicht in der j-sten Gruppe sind.

18. Die Zeitablaufplanungsmethode nach Anspruch 1, **dadurch gekennzeichnet, dass** die Benutzer über bewegliche Übertragungsgeräte verfügen.

19. Die Zeitablaufplanungsmethode nach Anspruch 18, **dadurch gekennzeichnet, dass** die beweglichen Übertragungsgeräte aus Mobiltelefonen und Funkterminal-Empfangsgeräten bestehen.

20. Die Zeitablaufplanungsmethode nach Anspruch 18, **dadurch gekennzeichnet, dass** die beweglichen Übertragungsgeräte aus Funkterminal-Empfangsgeräten bestehen.

21. Die Zeitablaufplanungsmethode nach Anspruch 1, 18, 19 oder 20, **dadurch gekennzeichnet, dass** das drahtlose Übertragungssystem aus mehreren Zellen (A-E) besteht, wobei jede Zelle (A-E) aus einen Basisstation (805) und aus mindestens einer Umsetzerfunkstelle (801-804) aufgebaut ist, und die Zeitablaufplanungsmethode die folgenden Schritte umfaßt:
Aufteilen der Umsetzerfunkstellen (801-804) injede Zelle (A-E) in N Gruppen je nach Intensität des potentiellen Geräuschpegel zwischen den Umsetzerfunkstellen (801-804);
Aufteilen einer Betriebsdauer in N Phasen durch die Basisstation (805) in jede Zelle (A-E);
**dadurch gekennzeichnet, dass** in beliebigen zwei nebeneinander angeordneten Zellen A und B, in der Zelle A die Basisstation (805) die Umsetzerfunkstellen (801-804) in der j-sten Gruppe während der i-sten Phase bedient;
in der Zelle B die Basisstation (805) die Umsetzerfunkstellen (801-804) in der k-sten Gruppe während der i-sten Phase bedient,
in der Zelle A die Umsetzerfunkstellen (801-804), die nicht in der j-sten Gruppe sind, die Benutzer innerhalb der Betriebsbereiche der Umsetzerfunkstellen (801-804), die während der i-sten Phase nicht in der j-sten Phase sind, bedienen; und
in der Zelle B die Umsetzerfunksfellen (801-804), die nicht in der k-sten Gruppe sind, die Benutzer innerhalb der Betriebsbereiche der Umsetzerfunkstellen (801-804), die während der i-sten Phase nicht in der k-sten Phase sind, bedienen;
**dadurch gekennzeichnet, dass** das Geräusch zwischen den Umsetzerfunkstellen (801-804) der j-sten Gruppe der Zelle A und den Umsetzerfunkstellen (801-804) der k-sten Gruppe in der Zelle B innerhalb eines vorbestimmten Geräuschpegels sind.

22. Die Zeitablaufplanungsmethode nach Anspruch 21, **dadurch gekennzeichnet, dass** die Umsetzerfunkstellen (801-804) in jeder Zelle (A-E) so angeordnet werden, dass sie einer LOS-Bedingung zur Basisstation (805) in der Zelle (A-E) entsprechen.

23. Die Zeitablaufplanungsmethode nach Anspruch 21, **dadurch gekennzeichnet, dass** die Umsetzerfunkstellen (801-804) in jeder Zelle (A-E) innerhalb des Betriebsbereiches der Basisstation (805) in der Zelle (A-E) angeordnet sind.

24. Die Zeitablaufplanungsmethode nach Anspruch 21, **dadurch gekennzeichnet, dass** die Umsetzerfunkstellen (801-804) in jeder Zelle (A-E) die Benutzer in der Zelle (A-E) und ohne LOS-Bedingung zur Basisstation (805) in der Zelle (A-E) bedienen.

25. Die Zeitablaufplanungsmethode nach Anspruch 21, **dadurch gekennzeichnet, dass** die Umsetzerfunltstellen (801-804) in jeder Zelle (A-E) die Benutzerbedienen, die über eine bessere Verbindungsqualität zu den Umsetzerfunkstellen (801-804), jedoch über eine schlechtere Verbindungsqualität mit der Basisstation (805) in der Zelle (A-E) verfügen.

26. Die Zeitablaufplanungsmethode nach Anspruch 21, **dadurch gekennzeichnet, dass** die Schritte (S103) zum Aufteilen der Umsetzerfunkstellen (801-804) in jeder Zelle (A-E) in N Gruppen die folgenden Schritte umfaßt:
Messen den Intensität des potentiellen Geräuschpegels durch die Umsetzerfunkstellen (801-804) in den Zellen (A-E) von anderen Umsetzerfunkstellen (801-804) und Basisstationen (805), wobei der Geräuschpegel durch Messen der Datensignale, die von den Umsetzerfunkstellen (801-804) und Basisstationen (805) übertragen werden, gemessen wird;
Übermitteln der Meßresultate durch jede Umsetzerfunkstelle (801-804) in der Zelle (A-E) an die Basisstation (805) in der Zelle (A-E); und
Aufteilen der Umsetzerfunkstellen (801-804) in N Gruppen durch die Basisstation (805) in der Zelle (A-E) in Übereinstimmung mit den Meßresultaten, die von den Umsetzerfunkstellen (801-804) übermittelt werden.

27. Die Zeitablaufplanungsmethode nach Anspruch 21, **dadurch gekennzeichnet, dass** der Schritt (S103) zum Aufteilen der Umsetzerfunkstellen (801-804) in jeder Zelle (A-E) in N Gruppen die folgenden Schritre umfaßt:
Messen (S 102) der Intensität des potentiellen Geräuschpegels von anderen Umsetzerfunkstellen (801-804) und Basisstationen (805) durch jede Umsetzerfunkstelle (801-804) in der Zelle (A-E), wobei der potentielle Geräuschpegel durch Messen der Bezugssignale, die durch die Umsetzerfuokstellen (801-804) bzw. die Basisstation (805) gemessen werden kann;
Übermitteln der Meßresultate an die Basisstation (805) durch jede Umsetzerfunkstelle (801-804) in der gleichen Zelle (A-E); und
Aufteilen der Umsetzerfunkstellen (801-804) in N Gruppen durch die Basisstation (805) in der Zelle (A-E) in Übereinstimmung mit den Meßresultaten, die von den Umsetzerfunkstellen (801-804) übermittelt werden.

28. Die Zeitablaufplanungsmethode nach Anspruch 27, **dadurch gekennzeichnet, dass** der Schritt (S 103) zum Aufteilen der Umsetzerfunkstellen (801-804) in jeder Zelle (A-E) in N Gruppen den folgenden Schritt umfaßt:
Bestimmen der Reihenfolge der Zeitablaufplanung der Umsetzerfunkstellen in der Zelle durch die Basisstation in der gleichen Zelle (A-E).

29. Die Zeitablaufplanungsmethode nach Anspruch 27, **dadurch gekennzeichnet, dass** zwei der Umsetzerfunkstellen (801-804) in jeder Zelle (A-E), die eine vorbestimmte Geräuschpegelschwelle überschreiten, in verschiedene Gruppen aufgeteilt sind.

30. Die Zeitablaufplanungsmethode nach Anspruch 27, **dadurch gekennzeichnet, dass** die beiden Umsetzerfunkstellen in verschiedene Gruppen aufgeteilt sind, falls das Ziel der Übermittlung einer der Umsetzerfunkstellen (801-804) in jeder Zelle (A-E) eine weitere Umsetzerfunkstelle (801-804) darstellt und die Zielumsetzerfunkstelle keine Daten gleichzeitig empfangen und senden kann.

31. Die Zeitablaufplanungsmethode nach Anspruch 21, **dadurch gekennzeichnet, dass** die Basisstation (805) in jeder Zelle (A-E) einen Betrieb in N Phasen aufteilt, wobei N für die Gruppennummer der Umsetzerfunkstellen (801-804) in der Zelle (A-E) steht; wobei die Betriebsdauer eine Länge eines Datenübertragunasblockes ist und dieser Dalenübertragungsbiock in N Phasen aufgeteilt ist.

32. Die Zeitablaufplanungsmethode nach Anspruch 21, **dadurch gekennzeichnet, dass** die Basisstation (805) in jeder Zelle (A-E) eine Betriebsdauer in N Phasen aufteilt, wobei N für die Gruppennummer der Umsetzerfunkstellen (801-804) in der Zelle (A-E) steht; wobei die Betriebsdauer eine Länge mehrerer Datenübertragungsblöcke ist und diese Datenübertragungsblöcke alle zusammen in N Phasen aufgeteilt sind.

33. Die Zeitablaufplanungsmethode nach Anspruch 21, weiter umfassend:
die Basisstation (805) in der Zelle A in eine der beiden nebeinander befindlichen Zellen A und B die Benutzer in einer Richtung der Umsetzerfunkstellen (801-804) während der i-sten Phase in der j-sten Gruppe bedient; und
die Basisstation (805) in der Zelle B die Benutzer in einer Richtung der Umsetzerfunkstellen (801-804) während der i-sten Phase in der k-sten Gruppe bedient.

34. Die Zeitablaufplanungsmethode nach Anspruch 33, weiter umfassend:
Durchführen der Abwärtsübertragung durch die Basisstation (805) in der Zelle A an die Benutzer in einer Richtung der Umsetzerfunkstellen (801-804) in der j-sten Gruppe während der i-sten Phase;
Durchführen der Aufwärtsübertragung durch die Benutzer in der Zelle A in Richtung der Umsetzerfunkstellen (801-804) in der j-sten Gruppe zur Basis (805) während der i-sten Phase;
Durchführen der Abwärtsübeztragung durch die Basisstation (805) in der Zelle B an die Benutzer in Richtung der Umsetzerfunkstellen (801-804) in der k-sten Gruppe während der i-sten Phase; und
Durchführen der Aufwärtsübertragung durch die Benutzer in der Zelle B in Richtung der Umsetzerfunkstellen (801-804) in der k-sten Gruppe zur Basistation (805) während der i-sten Phase.

35. Die Zeitablaufplanungsmethode nach Anspruch 21, weiter umfassend:
Bedienen der Benutzer, und zwar nicht in Richtung der Umsetzerfunkstellen (801-804) in der j-sten Gruppe der Zelle A oder nicht in Richtung der Umsetzerfunkstellen (801-804) in der k-sten Gruppe der Zelle B, sondern der LOS-Bedingung zur Basisstation (805) mit der richtigen Leistungssteuerung durch die niedrigere Übertragungsfahgkeit während der i-sten Phase durch die Basisstation (805) in jeder Zelle (A-E) entsprechen;
**dadurch gekennzeichnet, dass** mit der niedrigen Übertragungsfähigkeit das Geräusch der Basisstation (805) zu den Umsetzerfunkstellen (801-804) innerhalb einer vorbestimmten Schwelle sein kann.

36. Die Zeitablaufplanungsmethode nach Anspruch 21, weiter umfassend:
Durchführen einer Abwärtsübertragung durch die Basisstation (805) in der Zelle A zu den Umsetzerfunkstellen (801-804) in der j-sten Gruppe während der i-sten Phase;
Durchführen einer Aufwärtsübertragung durch die Umsetzerfunkstellen (801-804) in der j-sten Gruppe in der Zelle A zur Basisstation (805) während der i-sten Phase;
Durchführen einer Abwärtsübertragung durch die Basisstation (805) in der Zelle B zu den Umsetzerfunkstellen (801-804) in der k-sten Gruppe während der i-sten Phase; und
Durchführen einer Aufwärtsübertragung durch die Umsetzerfunkstellen (801-804) in der Zelle B in der k-sten Gruppe zur Basisstation (805) während der i-sten Phase.

37. Die Zeitablaufplanungsmethode nach Anspruch 21, weiter umfassend:
Durchführen der Abwärtsübertragung durch die Umsetzerfunkstellen (801-804) in der Zelle A, die nicht in der j-sten Gruppe sind, zu den Benutzern innerhalb der Betriebsbereiche der Umsetzerfunkstellen (801-804), die während der i-sten Phase nicht in der j-sten Gruppe sind;
Durchführen der Aufwärtsübertragung zu den Umsetzerfunkstellen (801-804), die nicht in der j-sten Gruppe während der i-sten Phase sind, durch Benutzer in der Zelle A innerhalb der Betriebsbereiche der Umsetzerfunkstellen (801-804), die nicht in der j-sten Gruppe sind;
Durchführen der Abwärtsübertragung durch die Umsetzerfunkstellen (801-804) in der Zelle N, die nicht in der k-sten Gruppe sind, an die Benutzer innerhalb der Betriebsbereiche der Umsetzerfunkstellen (801-804), die während der i-sten Phase nicht in der k-sten Gruppe sind; und
Durchführen der Aufwärtsübertragung zu den Umsetzerfunkstellen (801-804), die während der i-sten Phase nicht in der k-sten Phase sind, durch die Benutzer in der Zelle B innerhalb der Betriebsbereiche, die nicht in der k-sten Gruppe sind.

38. Ein System zur Wiederanwendung der Funkbetriebsmittel, wobei das System aufgebaut ist aus:
mindestens einer Umsetzerfunkstelle (801-804); und
mindestens einer Basisstation (805); **dadurch gekennzeichnet, dass** die Basisstation (805) zum Aufteilen der Umsetzerfunkstellen (801-804) in N Gruppen in Übereinstimmung mit der Intnsität des potentiellen Geräuschpegels zwischen den Umsetzerfunkstellen (801-804) ausgeführt ist, wobei N eine Ganzzahl größer als 0 ist;
**dadurch gekennzeichmet dass** die Basisstation (805) zum Aufteilen einer Betriebsdauer in N Phase ausgeführt ist; und
**dadurch gekennzeichnet, dass** die Basistation (805) zum Bedienen der Umsetzerfunkstellen (801-804) in der j-sten Gruppe während der i-sten Phase ausgeführt ist; wobei die Umsetzerfunksiellen (801-804), die nicht in der j-sten Gruppe sind, die Benutzer innerhalb der Betriebsbereiche der Umsetzerfunkstellen (801-804), die während der i-sten Phase nicht in der j-sten Gruppe sind, bedient.

39. Das System nach Anspruch 38, **dadurch gekennzeichnet, dass** die Umsetzerfunkstellen (801-80A) so angeordnet sind, dass sie einer LOS-Bedingung zur Basisstation (805) entsprechen.

40. Das System nach Anspruch 38, **dadurch gekennzeichnet, dass** die Umsetzerfunkstellen (801-804) innerhalb des Betriebsbereiches der Basisstation (805) angeordnet sind.

41. Das System nach Anspruch 38, **dadurch gekennzeichnet, dass** die Umsetzerfunkstellen (801-804) zum Bedienen der Benutzer ohne LOS-Bedinung zur Basisstation (805) ausgeführt sind.

42. Das System nach Anspruch 38, **dadurch gekennzeichnet, dass** die Umsetzerfunkstellen (801-804) zum Bedienen der Benutzer, die mit der Umsetzerfunkstelle (801-804) eine bessere, aber eine schlechtere Verbindungsqualität mit der Basisstation (805) haben, ausgeführt sind.

43. Das System nach Anspruch 38, **dadurch gekennzeichnet, dass** jede Umsetzerfunkstelle (801-804) zum Messen der Intensität des potentiellen Geräuschpegels von anderen Umsetzerfunkstellen (801-804) und Basisstationen (805) ausgeführt ist und die Meßresultate zur Basisstation (805) übermittelt, wobei der Geräuschpegel durch Messen der Übertragungsdaten der Umsetzerfunkstellen (801-804) in N Gruppen in Übereinstimmung mit den Messungen, die durch die Umsetzerfunkstellen (801-804) übermittelt werden, gemessen wird.

44. Das System nach Anspruch 38, **dadurch gekennzeichnet, dass** jede Umsetzerfunkstelle (801-804) zum Messen der Intensität des potentiellen Geräuschpegels von anderen Umsetzerfunkstellen (801-804) ausgeführt ist und die Meßresultate zur Basisstation (805) übermittelt, wobei der Geräuschpegel durch Messen der Bezugssignale gemessen bzw. durch die Umsetzerfunkstellen (801-804) und Basisstationen (805) übertragen wird; und die Basisstation (805) zum Aufteilen der Umsetzerfunkstellen (801-804) in N Gruppen in Übereinstimmung mit den von den Umsetzerfunkstetlen (801-804) übermittelten Meßresultaten ausgeführt ist.

45. Das System nach Anspruch 44, **dadurch gekennzeichnet, dass** die Basisstation (805) zum Bestimmen der Reihenfolge der Zeitablaufplanung der Umsetzerfunkstellengruppen ausgeführt ist.

46. Das System nach Anspruch 44, **dadurch gekennzeichnet, dass** zwei der Umsetzerfunkstellen (801-804); die eine vorbestimmte Geräuschpegelschwelle überschreiten, in verschiedene Gruppen aufgeteilt sind.

47. Das System nach Anspruch 44, **dadurch gekennzeichnet, dass** beide Umsetzerfunkstellen in verschiedene Gruppen aufgeteilt sind, falls das Ziel der Übertragung einer der Umsetzerfunkstellen (801-804) eine andere Umsetzerfunkstelle (801-804) ist und die Zielumsetzerfunkstelle keine Daten gleichzeitig empfangen und senden kann.

48. Das System nach Anspruch 38, **dadurch gekennzeichnet, dass** die Basisstation (805) zum Bedienen der Benutzer in Richtung der Umsetzerfunkstellen (801-804) in der j-sten Gruppe während der i-sten Phase ausgeführt ist.

49. Das System nach Anspruch 48, **dadurch gekennzeichnet, dass** die Basisstation (805) zum Durchführen einer Abwärtsübertragung zu den Benutzern in Richtung der Umsetzerfunkstellen (801-804) in der j-sten Gruppe während der i-sten Phase ausgeführt ist, und die Benutzer zum Durchführen der Aufwärtsübertragung zur Basisstation (805) während der i-sten Phase in Richtung der Umsetzerfunkstellen (801-804) in der j-sten Gruppe ausgeführt sind.

50. Das System nach Anspruch 38, **dadurch gekennzeichnet, dass** die Basisstation (805) zum Bedienen der Benutzer ausgeführt ist, wobei dies nicht in die Richtung der Umsetzerfunkstellen (801-804) in derj-sten Gruppe erfolgt, sondern der LOS-Bedingung zur Basisstation (805) mit der richtigen Leistungssteuerung durch die niedrigere Übertragungsfähigkeit während der i-sten Phase entsprechen, wobei die niedrigere Übertragungsfähigkeit das Geräusch der Basisstation (805) zu den Umsetzerfunkstellen (801-804) innerhalb einer vorbestimmten Schwelle zuläßt.

51. Das System nach Anspruch 38, **dadurch gekennzeichnet, dass** die Basisstation (805) zum Durchführen einer Abwärtsübertragung zu den Umsetzerfunkstellen (801-804) in der j-sten Gruppe während der i-sten Phase, und die Umsetzerfunkstellen (801-804) in der j-sten Gruppe zum Durchführen einer Aufwärtsübertragung zur Basisstation (805) während der i-sten Phase ausgeführt ist.

52. Das System nach Anspruch 38, **dadurch gekennzeichnet, dass** die Umsetzerfunkstellen (801-804), die nicht in der j-sten Gruppe sind, zum Durchführen einer Abwärtsübertragung zu den Benutzern innerhalb der Betriebsbereiche der Umsetzerfunkstellen (801-804), die während der i-sten Phase nicht in der j-sten Phase sind; und zum Durchführen einer Aufwärtsübertragung zu den Umsetzerfunkstellen, die während der i-sten Phase nicht in der j-sten Phase sind, durch die Benutzer innerhalb der Betriebsbereiche der Umsetzerfunkstellen (801-804), die nicht in der j-sten Gruppe sind, ausgeführt sind.

53. Das System nach Anspruch 38, **dadurch gekennzeichnet, dass** die Benutzer über bewegliche Übertragungsgeräte verfügen.

54. Das System nach Anspruch 53, **dadurch gekennzeichnet, dass** die beweglichen Übertragungsgeräte aus Mobiltelefonen und Funkterminal-Empfangsgeräten bestehen.

55. Das System nach Anspruch 53, **dadurch gekennzeichnet, dass** die beweglichen Übertragungsgeräte aus Funkterminal-Empfangsgeräten bestehen

## Revendications

1. Un procédé de programmation pour un système de communication à relais multi-sauts sans fil, où le système de communication sans fil comprend au moins une station de base (805) dominant une pluralité de stations relais (801-804), le procédé de programmation étant **caractérisé en ce que**:
séparant les stations relais (801-804) en N groupes en fonction de l'intensité du niveau d'interférence potentielle entre les stations relais (801-804), où N représente un entier supérieur à zéro;
divisant une période de service en N phases par la station de base (805); servant les stations relais (801-804) dans un groupe j^{th} durant une phase i^{th} par la station de base (805) et servant les utilisateurs et les stations relais subordonnées (801-804) à l'intérieur des aires de service des stations relais (801-804) non incluses dans le groupe jth durant la phase i^{th} par les stations relais (801-804) non incluses dans le groupe j^{th}.

2. Le procédé de programmation tel que défini dans la revendication 1, où les stations relais (801-804) sont déployées pour avoir une condition de champ de visibilité (CDV) en direction de la station de base (805).

3. Le procédé de programmation tel que défini dans la revendication 1, où les stations relais (801-804) sont déployées à l'intérieur d'une aire de service de la station de base (805).

4. Le procédé de programmation tel que défini dans la revendication 1, où les stations relais (801-804) servent les utilisateurs n'ayant pas de condition CDV en direction de la station de base (805).

5. Le procédé de programmation tel que défini dans la revendication 1, où les stations relais (801-804) servent les utilisateurs ayant une meilleure qualité de liaison en direction de la station relais (801-804) mais ayant une plus mauvaise qualité de liaison en direction de la station de base (805).

6. Le procédé de programmation tel que défini dans la revendication 1, où l'étape de séparer les stations relais (801-804) en N groupes comprend:
la mesure (S102) de l'intensité du niveau potentiel d'interférence à partir d'autres stations relais (801-804) et stations de base (805) par chacune des stations relais (801-804), où le niveau potentiel d'interférence est mesuré en mesurant les signal de données transmis par les stations relais (801-804) et les stations de base (805);
le rapport des résultats de mesures à la station de base (805) par chacune des stations relais (801-804); et
la séparation (S103) des stations relais (801-804) en N groupes par la station de base (805) selon les résultats de mesures rapportés par les stations relais (801-804).

7. Le procédé de programmation tel que défini dans la revendication 1, où l'étape (S103) de séparation des stations relais (801-804) en N groupes comprend:
la mesure de l'intensité du niveau potentiel d'interférence à partir d'autres stations relais (801-804) et stations de base (805) en utilisant chacune des stations relais (801-804), où le niveau potentiel d'interférence peut être mesuré en mesurant le signal de référence transmis par les stations relais (801-804) et stations de base (805) respectivement;
le rapport des résultats de mesures à la station de base (805) par chacune des stations relais (801-804); et
la séparation des stations relais (801-804) en N groupes par la station de base (805) selon les résultats de mesures rapportés par les stations relais (801-804).

8. Le procédé de programmation tel que défini dans la revendication 7, où l'étape (S103) de séparation des stations relais (801-804) en N groupes comprend:
la détermination d'un ordre de programmation des groupes par la station de base (805).

9. Le procédé de programmation tel que défini dans la revendication 7, où deux des stations relais (801-804) pouvant potentiellement dépasser un seuil tolérable d'interférence sont séparées en différents groupes.

10. Le procédé de programmation tel que défini dans la revendication 7, où si la cible de transmission d'une station relais (801-804) est une autre station de relais (801-804) et la station relais cible ne peut pas recevoir et envoyer des données simultanément, les deux stations relais sont séparées en différents groupes.

11. Le procédé de programmation tel que défini dans la revendication 1, où la station de base (805) divise une période de service en N phases, où N est un numéro de groupe des stations relais (801-804): où la période de service est une longueur d'une trame et la trame est divisée en N phases.

12. Le procédé de programmation tel que défini dans la revendication 1, où la station de base (805) divise (S104) une période de service en N phases, où N est un nombre de groupe des stations relais (801-804); où une période de service est une longueur d'une pluralité de trames et les trames sont divisées en N phases toutes ensemble.

13. Le procédé de programmation tel que défini dans la revendication 1, comprenant en outre:
la station de base (805) servant les utilisateurs dans la direction de stations relais (801-804) dans un groupe j^{th} durant une phase i^{th} (S105).

14. Le procédé de programmation tel que défini dans la revendication 13, où l'étape (S105) de servir les utilisateurs dans la direction des stations relais (801-804) dans le groupe j^{th} durant la phase il comprend:
la réalisation d'une transmission descendante vers les utilisateurs dans la direction des stations relais (8D1-804) dans un groupe j^{th} par la station de base (805) durant une phase i^{th}; et
la réalisation d'une transmission montante vers la station de base (805) par les utilisateurs dans la direction des stations relais (801-804) dans le groupe j^{th} durant la phase i^{th}.

15. Le procédé de programmation tel que défini dans la revendication 1, comprenant en outre:
servir des utilisateurs non dans la direction des stations relais (801-804) dans le groupe j^{th} tout en ayant la condition CDV en direction de la station de base (805) avec un contrôle approprié de la puissance par une puissance de transmission plus faible durant la phase i^{th} en utilisant la station de base (805),
où la puissance de transmission plus faible permet à une interférence générée par la station de base (805) vers les stations relais (801-804) d'être inférieure à un seuil tolérable.

16. Le procédé de programmation tel que défini dans la revendication 1, où l'étape de la station de base (805) servant les stations relais (801-804) dans le groupe j^{th} durant la phase i^{th} comprend:
la réalisation d'une transmission descendante vers les stations relais (801-804) dans le groupe j^{th} par la station de base (805) durant la phase i^{th}; et
la réalisation d'une transmission montante vers la station de base (805) par les stations relais (801-804) dans le groupe j^{th} durant la phase i^{th}.

17. Le procédé de programmation tel que défini dans la revendication 1, où l'étape des stations relais (801-804) pas dans le groupe j^{th} servant les utilisateurs ayant la condition CDV vers ces stations relais (801-804) durant la phase i^{th} comprend:
la réalisation d'une transmission descendante vers les utilisateurs à l'intérieur d'aires de service des stations relais (801-804) pas dans le groupe j^{th} durant la phase i^{th} par les stations relais (801-804) pas dans le groupe j^{th}; et
la réalisation d'une transmission montante vers les stations relais (801-804) pas dans le groupe j^{th} par des utilisateurs à l'intérieur d'aires de service des stations relais (801-804) pas dans le groupe j^{th} durant la phase i^{th}.

18. Le procédé de programmation tel que défini dans la revendication 1, où les utilisateurs comprennent des appareils de communication mobile.

19. Le procédé de programmation tel que défini dans la revendication 18, où les appareils de communication mobile comprennent des téléphones mobiles et des équipements de réception terminale radio.

20. Le procédé de programmation tel que défini dans la revendication 18, où les appareils de communication mobile comprennent des équipements de réception terminale radio.

21. Un procédé de programmation selon la revendication 1, 18, 19 or 20, où le système de communication sans fil comprend une pluralité de cellules (A-E) et chaque cellule (A-E) comprend une station de base (805) et au moins une station relais (801-804), le procédé de programmation comprenant:
la séparation des stations relais (801-804) dans chaque cellule (A-E) en N groupes selon l'intensité du niveau potentiel d'interférence entre les stations relais (801-804);
la division d'une période de service en N phases par la station de base (805) dans chaque cellule (A-E);
où dans n'importe quelles cellules adjacentes A et B, dans la cellule A, la station de base (805) sert les stations relais (801-804) dans le groupe j^{th} durant la phase i^{th};
dans la cellule B, la station de base (805) sert les stations relais (801-804) dans le groupe k^{th} durant la phase i^{th},
dans la cellule A, des stations relais (801-804) pas dans le groupe j^{th} servent les utilisateurs à l'intérieur d'aires de service des stations relais (801-804) pas dans le groupe j^{th} durant la phase i^{th}; et
dans la cellule B, des stations relais (801-804) pas dans le groupe k^{th} servant les utilisateurs à l'intérieur d'aires de service des stations relais (801-804) pas dans le groupe k^{th} durant la phase i^{th};
où l'interférence entre les stations relais (801-804) du groupej^{th} de la cellule A et les stations relais (801-804) du groupe k^{th} dans la cellule B est dans les limites d'un seuil d'interférence prédéterminé.

22. Le procédé de programmation tel que défini dans la revendication 21, où les stations relais (801-804) dans chaque cellule (A-E) sont déployées pour avoir une condition CDV en direction de la station de base (805) dans la cellule (A-E).

23. Le procédé de programmation tel que défini dans la revendication 21, où les stations relais (801-804) dans chaque cellule (A-E) sont déployées à l'intérieur de l'aire de service de la station de base (805) dans la cellule (A-E).

24. Le procédé de programmation tel que défini dans la revendication 21, où les stations relais (801-804) dans chaque cellule (A-E) servent les utilisateurs dans la cellule (A-E) et sans condition CDV en direction de la station de base (805) dans la cellule (A-E).

25. Le procédé de programmation tel que défini dans la revendication 21, où les stations relais (801-804) dans chaque cellule (A-E) servent les utilisateurs ayant une meilleure qualité de liaison en direction de la station de relais (801-804) mais une moins bonne qualité de liaison en direction de la station de base (805) dans la cellule (A-E).

26. Le procédé de programmation tel que défini dans la revendication 21, où l'étape (S 103) de séparation des stations relais (801-804) dans chaque cellule (A-E) en N groupes comprend:
les stations relais (801-804) dans la cellule (A-E) mesurant respectivement l'intensité du niveau potentiel d'interférence à partir d'autres stations relais (801-804) et stations de base (805), où le niveau d'interférence est mesuré en mesurant les signaux de données transmis par les stations relais (801-804) et stations de base (805);
chaque station de relais (801-804) dans la cellule (A-E) rapportant les résultats de mesures à la station de base (805) dans la cellule (A-E); et
séparant les stations relais (801-804) en N groupes par la station de base (805) dans la cellule (A-E) selon les résultats de mesures rapportés par les stations relais (801-804).

27. Le procédé de programmation tel que défini dans la revendication 21, où l'étape (S103) de séparation des stations relais (801-804) dans chaque cellule (A-E) en N groupes comprend:
la mesure (S102) de l'intensité du niveau potentiel d'interférence à partir d'autres stations relais (801-804) et stations de base (805) par chaque station de relais (801-804) dans la cellule (A-E), où le niveau potentiel d'interférence peut être mesuré en mesurant les signaux de référence transmis respectivement par les stations relais (801-804) et la station de base (805);
le rapport des résultats de mesures à la station de base (805) par chaque station de relais (801-804) dans la même cellule (A-E); et
séparant les stations relais (801-804) en N groupes par la station de base (805) dans la cellule (A-E) selon les résultats de mesures rapportés par les stations relais (801-804).

28. Le procédé de programmation tel que défini dans la revendication 27, où l'étape (S103) de séparation des stations relais (801-804) dans chaque cellule (A-E) en N groupes comprend:
la détermination de l'ordre de programmation des groupes de stations relais dans la cellule par la station de base dans la même cellule (A-E).

29. Le procédé de programmation tel que défini dans la revendication 27, où deux des stations relais (801-804) dans chaque cellule (A-E) qui arrivent au-delà d'un seuil d'interférence prédéterminé sont séparées en différents groupes.

30. Le procédé de programmation tel que défini dans la revendication 27, où si la cible de transmission d'une station relais (801-804) dans chaque cellule (A-E) est une autre station de relais (801-804) et la station relais cible ne peut pas recevoir et envoyer des données simultanément, les deux stations relais sont séparées en différents groupes.

31. Le procédé de programmation tel que défini dans la revendication 21, où la station de base (805) dans chaque cellule (A-E) divise une période de service en N phases, où N est le nombre de groupe des stations relais (801-804) dans la cellule (A-E); ou la période de service est une longueur d'une trame et la trame est divisée en N phases.

32. Le procédé de programmation tel que défini dans la revendication 21, où la station de base (805) dans chaque cellule (A-E) divise une période de service en N phases, où N est le nombre de groupe des stations relais (801-804) dans la cellule (A-E); où la période de service est une longueur d'une pluralité de trames et les trames sont divisées en N phases toutes ensemble.

33. Le procédé de programmation tel que défini dans la revendication 21 comprenant en outre:
dans n'importe quelles cellules adjacentes A et B, la station de base (805) dans la cellule A servant les utilisateurs est dans une direction des stations relais (801-804) dans le groupe j^{th} durant la phase i^{th}; et
la station de base (805) dans la cellule B servant les utilisateurs est dans une direction des stations relais (801-804) dans le groupe k^{th} durant la phase i^{th}.

34. Le procédé de programmation tel que défini dans la revendication 33 comprenant en outre:
la station de base (805) dans la cellule A réalisant une transmission descendante vers les utilisateurs dans la direction des stations relais (801-804) dans le groupe j^{th} durant la phase i^{th};
les utilisateurs dans la cellule A dans la direction des stations relais (801-804) dans le groupe j^{th} réalisant une transmission montante dans la direction de la station de base (805) durant la phase i^{th};
la station de base (805) dans la cellule B réalisant une transmission descendante vers les utilisateurs dans la direction des stations relais (801-804) dans le groupe k^{th} durant la phase i^{th}; et
les utilisateurs dans la cellule B dans la direction des stations relais (801-804) dans le groupe k^{th} réalisant une transmission montante dans la direction de la station de base (805) durant la phase i^{th}.

35. Le procédé de programmation tel que défini dans la revendication 21 comprenant en outre:
servir les utilisateurs non dans la direction des stations relais (801-804) dans le groupe j^{th} de la cellule A ou non dans la direction des stations relais (801-804) dans le groupe k^{th} de la cellule B mais ayant la condition CDV en direction de la station de base (805) avec un contrôle approprié de la puissance par une puissance de transmission plus faible durant la phase i^{th} par la station de base (805) dans chaque cellule (A-E);
où la puissance de transmission plus faible permet à une interférence générée par la station de base (805) vers les stations relais (801-804) d'être dans les limites d'un seuil déterminé.

36. Le procédé de programmation tel que défini dans la revendication 21 comprenant en outre:
la station de base (805) dans la cellule A réalisant une transmission descendante vers les stations relais (801-804) dans le groupe j^{th} durant la phase i^{th};
les stations relais (801-804) dans le groupe j^{th} dans la cellule A réalisant une transmission montante dans la direction de la station de base (805) durant la phase i^{th};
la station de base (805) dans la cellule B réalisant une transmission descendante vers les stations relais (801-804) dans le groupe k^{th} durant la phase i^{th}; et
les stations relais (801-804) dans la cellule B dans le groupe k^{th} réalisant une transmission montante dans la direction de la station de base (805) durant la phase i^{th}.

37. Le procédé de programmation tel que défini dans la revendication 21 comprenant en outre:
des stations relais (801-804) dans la cellule A pas dans le groupe j^{th} réalisant une transmission descendante vers les utilisateurs à l'intérieur de l'aire de services des stations relais (801-804) pas dans le groupe j^{th} durant la phase i^{th};
les utilisateurs dans la cellule A à l'intérieur de l'aire de services des stations relais (801-804) pas dans le groupe j^{th} réalisant une transmission montante vers les stations relais (801-804) pas dans le groupe j^{th} durant la phase i^{th};
les stations relais (801-804) dans la cellule B pas dans le groupe k^{th} réalisant une transmission descendante vers les utilisateurs à l'intérieur de l'aire de services des stations relais (801-804) pas dans le groupe k^{th} durant la phase i^{th}; et
les utilisateurs dans la cellule B à l'intérieur de l'aire de services des stations relais (801-804) pas dans le groupe k^{th} réalisant une transmission montante vers les stations relais (801-804) pas dans le groupe k^{th} durant la phase i^{th};

38. Un système pour réutiliser des ressources radio, le système comprenant:
au moins une station relais (801-804); et
au moins une station base (805); **caractérisé en ce que** la station de base (805) est adaptée pour séparer les stations relais (801-804) en N groupes selon l'intensité du niveau potentiel d'interférence entre les stations relais (801-804), où N représente un entier supérieur à zéro;
où la station de base (805) est adaptée pour diviser une période de service en N phases; et
où la station de base (805) est adaptée pour servir les stations relais (801-804) dans le groupe j^{th} durant la phase i^{th}; et les stations relais (801-804) pas dans le groupe j^{th} servent les utilisateurs à l'intérieur de l'aire de services des stations relais (801-804) pas dans le groupe j^{th} durant la phase i^{th}.

39. Le système tel que défini dans la revendication 38, où les stations relais (801-804) sont déployées pour avoir la condition CDV vers la station de base (805).

40. Le système tel que défini dans la revendication 38, où les stations relais (801-804) sont déployées à l'intérieur de l'aire de service de la station de base (805).

41. Le système tel que défini dans la revendication 38, où les stations relais (801-804) sont adaptées pour servir les utilisateurs sans la condition CDV vers la station de base (805).

42. Le système tel que défini dans la revendication 38, où les stations relais (801-804) sont adaptées pour servir les utilisateurs ayant une meilleure qualité de liaison en direction de la station relais (801-804) mais une plus mauvaise qualité de liaison en direction de la station de base (805).

43. Le système tel que défini dans la revendication 38, où chaque station de relais (801-804) est adaptée pour mesurer l'intensité du niveau potentiel d'interférence à partir d'autres stations relais (801-804) et stations de base (805) et rapporter les résultats de mesures vers la station de base (805), le niveau d'interférence est mesuré en mesurant les données de transmission des stations relais (801-804) et des stations de base (805); et la station de base (805) est adaptée pour séparer les stations relais (801-804) en N groupes selon les résultats de mesures rapportés par les stations relais (801-804).

44. Le système tel que défini dans la revendication 38, où chaque station de relais (801-804) est adaptée pour mesurer l'intensité du niveau potentiel d'interférence à partir d'autres stations relais (801-804) et rapporter les résultats de mesures vers la station de base (805), le niveau d'interférence est mesuré en mesurant les signaux de référence respectivement transmis par les stations relais (801-804) et les stations de base (805); et la station de base (805) est adaptée pour diviser les stations relais (801-804) en N groupes selon les résultats de mesures rapportés par les stations relais (801-804).

45. Le système tel que défini dans la revendication 44, où la station de base (805) est adaptée pour déterminer l'ordre de programmation des groupes de stations relais.

46. Le système tel que défini dans la revendication 44, où deux des stations relais (801-804) qui arrivent au-delà d'un seuil d'interférence prédéterminé sont séparées en différents groupes.

47. Le système tel que défini dans la revendication 44, où si la cible de transmission d'une station relais (801-804) est une autre station relais (801-804) et la station relais cible ne peut pas recevoir et envoyer de données simultanément, les deux stations relais sont séparées en différents groupes.

48. Le système tel que défini dans la revendication 38, où la station de base (805) est adaptée pour servir les utilisateurs dans la direction des stations relais (801-804) dans le groupe j^{th} durant la phase i^{th}.

49. Le système tel que défini dans la revendication 48, où la station de base (805) est adaptée pour réaliser une transmission descendante vers les utilisateurs dans la direction des stations relais (801-804) dans le groupe j^{th} durant la phase i^{th}, et les utilisateurs dans la direction des stations relais (801-804) dans le groupe j^{th} pour réaliser une transmission montante vers la station de base (805) durant la phase i^{th}.

50. Le système tel que défini dans la revendication 38, où la station de base (805) est adaptée pour servir les utilisateurs non dans la direction des stations relais (801-804) dans le groupe j^{th} mais ayant la condition CDV vers la station de base (805) avec un contrôle approprié de la puissance par une puissance de transmission plus faible durant la phase i^{th}, et la puissance de transmission plus faible permet à l'interférence de la station de base (805) vers les stations relais (801-804) d'être dans les limites d'un seuil prédéterminé.

51. Le système tel que défini dans la revendication 38, où la station de base (805) est adaptée pour réaliser une transmission descendante vers les stations relais (801-804) dans le groupe j^{th} durant la phase i^{th}, et les stations relais (801-804) dans le groupe j^{th} pour réaliser une transmission montante vers la station de base (805) durant la phase i^{th}.

52. Le système tel que défini dans la revendication 38, où des stations relais (801-804) pas dans le groupe j^{th} sont adaptées pour réaliser une transmission descendante vers les utilisateurs à l'intérieur de l'aire de services des stations relais (801-804) pas dans le groupe j^{th} durant la phase i^{th}; et les utilisateurs à l'intérieur de l'aire de services des stations relais (801-804) pas dans le groupe j^{th} pour réaliser une transmission montante vers les stations relais pas dans le groupe j^{th} durant la phase i^{th}.

53. Le système tel que défini dans la revendication 38, où les utilisateurs comprennent des appareils de communication mobile.

54. Le système tel que défini dans la revendication 53, où les appareils de communication mobile comprennent des téléphones mobiles et des équipements de réception terminale radio.

55. Le système tel que défini dans la revendication 53, où les appareils de communication mobile comprennent des équipements de réception terminale radio.
